Europäisches Patentamt

European Patent Office

Office européen des brevets

(11) Publication number: **0 187 939**
**A2**

(12) **EUROPEAN PATENT APPLICATION**

(21) Application number: **85115346.0**

(22) Date of filing: **03.12.85**

(51) Int. Cl.⁴: **H 02 G 5/06**

(30) Priority: **18.12.84 IT 2411084**

(43) Date of publication of application:
**23.07.86 Bulletin 86/30**

(84) Designated Contracting States:
**AT BE CH DE FR GB IT LI NL SE**

(71) Applicant: **ALFA STANDARD S.p.A.
Via Madrid 15
I-24049 Verdellino-Zingoni(Bergamo)(IT)**

(72) Inventor: **Clin, Michel
Via Macedonio Melloni, 34
I-20129 Milan(IT)**

(74) Representative: **Giambrocono, Alfonso, Dr. Ing. et al,
Ing. A. Giambrocono & C. S.r.l. Via Rosolino Pilo 19/B
I-20129 Milano(IT)**

(54) Duct for supplying electric power with reduced electrodynamic short-circuit and inductance effects.

(57) The electric power supply or transportation duct according to the invention is characterized in that all of the conductors forming it have their centers of gravity evenly arranged along the points of a single circle the center of which coincides with the center of gravity of the neutral conductor or wire.

Fig. 6

EP 0 187 939 A2

Croydon Printing Company Ltd.

DESCRIPTION

The present invention relates to a duct for supplying electric power, having reduced electrodynamic short- -circuit and inductance effects.

As is known, the presently available ducts consist of a plurality of conductors or wires arranged in an adjoining relationship, in such a way as to provide a single duct supplied with several phases. Each conductor consists of sections which are so arranged as to oppose a maximum moment of inertia to the electromechanical stresses, and is supported by suitable strong insulators or bushings. On the other hand, frequently deformations of the conductors or breakages of the supporting bushings occurs, because of the electromechanical stresses, without considering the losses caused by the mutual inductance of the conductors.

Accordingly, the main object of the present invention is to provide such a duct for supplying electric power which is effective to overcome the above mentioned drawback, that is to greatly reduce the electrodynamic forces, mutual inductance of the conductors and the consequences related to those phenomena.

The above and other objects, which become more apparent thereinafter, are achieved as disclosed in the following description and appended claims.

More specifically, the duct for supplying electric power according to the present invention is characterized in that all of the conductors forming it are arranged evenly along the points of a single circle, the center of which coincides with the center of gravity of the neutral wire.

The invention is illustrated by way of an indicative but not limitative example in the figures of the accompanying drawings, where:

figure 1 schematically illustrates the arrangement of the conductors of a single-phase conductor including three conductors for pole;

figure 2 schematically illustrates the arrangement of the conductors of a three-phase conductor including five conductors for pole, with a neutral wire formed by three conductors;

figure 3 illustrates a supporting plate member for a three-phase conductor, including three conductors for phase and a single-conductor neutral wire;

figure 4 illustrates a bearing small block forming the plate member engaged by a rectangular cross-section conductor;

figure 5 is a cross-sectional view of a bearing block, as taken along the line V-V of figure 4;

figure 6 illustrates a further embodiment of the invention in which the conductors are tangentially arranged;

figure 7 illustrates a partially sectioned view according to the direction VII of figure 4 of another embodiment of the bushings; and

figure 8 is a view taken according to the direction VIII of figure 7.

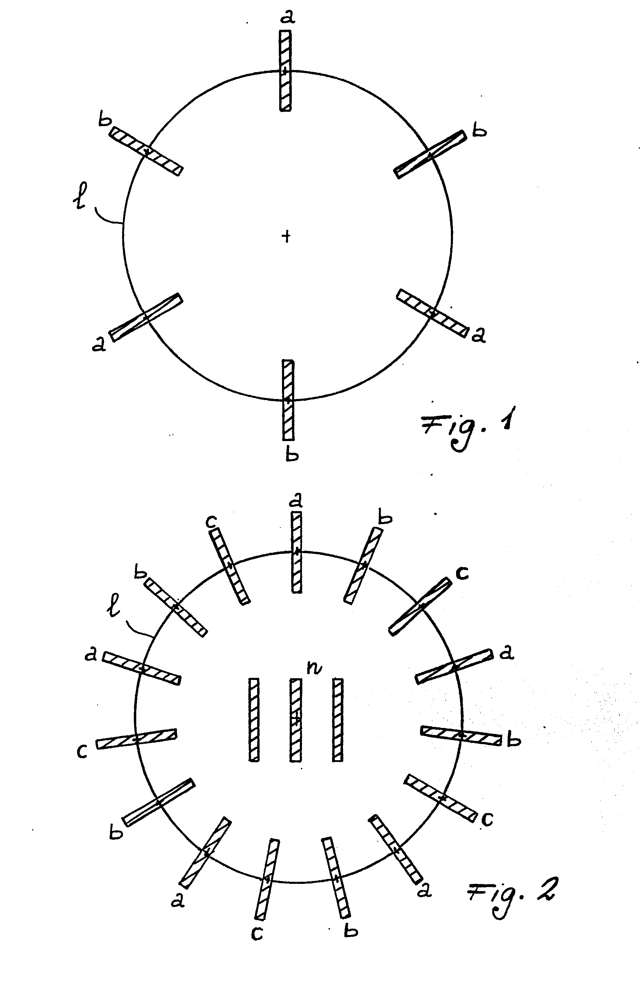

With reference to the mentioned figures 1 and 2, the duct for supplying electric power according to the invention comprises a plurality of conductors arranged with their centers of gravity along the points of a single circle L, having such a diameter which depends on that of said conductors.

In the figures the same letter indicates all of the conductors of the same polarity. In the case in which also the neutral wire "n" is provided (see figure 2), this letter is arranged in such a way that its center of gravity coincides with the center of the circle L. In the exemplary case shown, the conductors have a rectangular corss-section, but it should be apparent that the shape and surface thereof may vary depending on the contingent technical requirements.

It should be pointed out that carried out tests have shown that, the circle L being the same, by increasing the number of conductors, and hence decreasing the gap therebetween, the value of the resultant of the electromechanical forces acting on the single conductors will decrease, in addition to decreasing the inductance. In the case of a practical designing of a duct according to the present invention, the circle size and conductor number will be selected according to the best compromise, considering the contingent requirements.

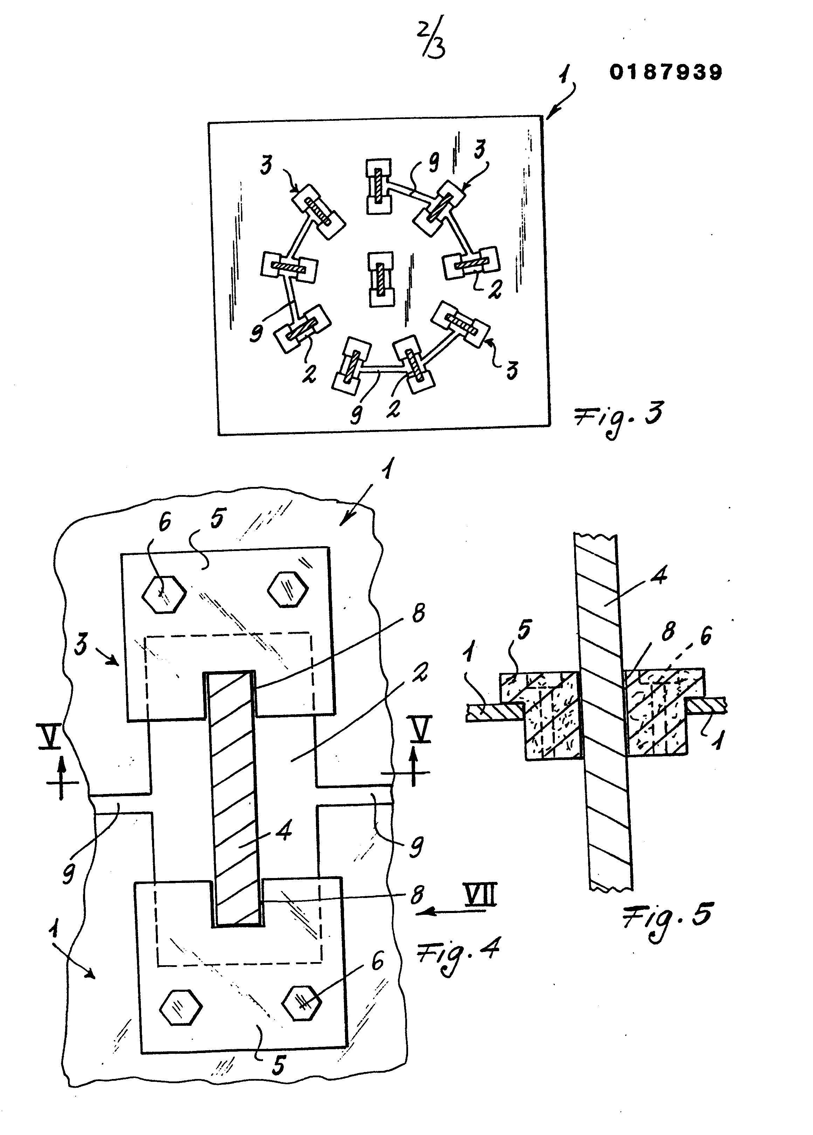

With reference to figures 3, 4 and 5 the conductors a, b or c are supported, inside the duct body (not shown for clarity) by plate members 1, more or less spaced along the duct depending on the provided electrodynamic stresses.

On each plate member there are formed through openings 2 therein there are affixed small blocks 3 for supporting the ducts 4. Each block 3 consists of an insulating base pair 5, affixed by means of bolts 6 to the plate member 1.

The bases 5 house the conductor 4 inside slots 8 having the same shape as said conductor with a slight clearance in order to fit expansions. In order to eliminate the losses due to the parasitic magnetic fields circulating through the plate member 1, the altter may be provided with three openings 2, therethrough three conductors of the type a, b, c are passed, said openings being coupled by cuts 9.

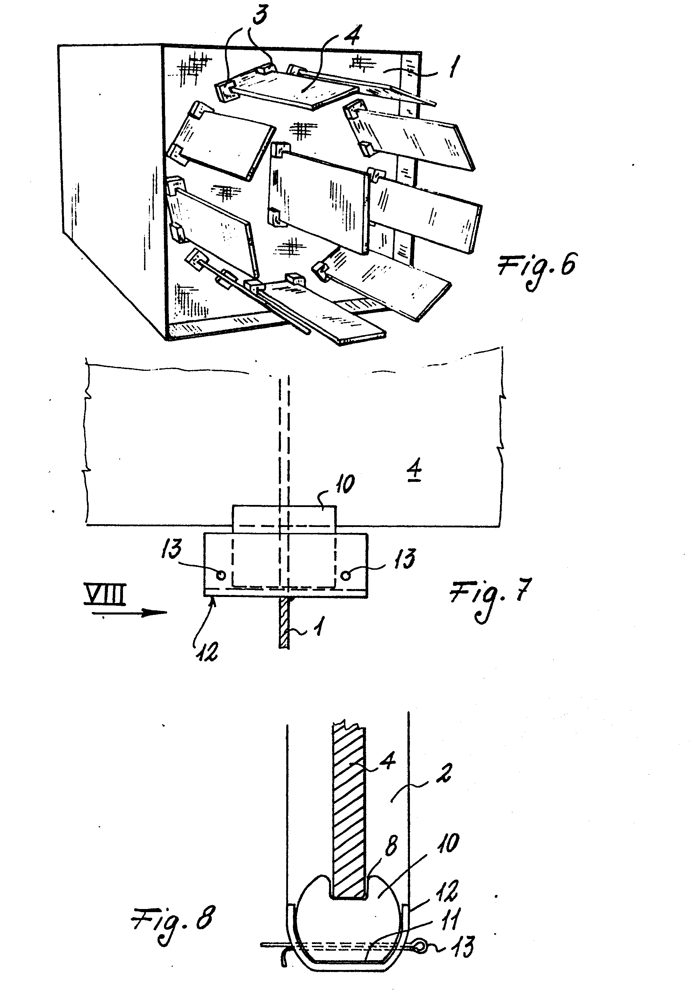

With reference to figures 6, 7 and 8 it should be apparent that the conductors may be tangentially arranged with respect to the hypotetical circle thereon they are arranged, whereas the bushings 10 are shaped as small cylinders having a respective groove 8 for receiving the conductors 4 and are provided, oppositedly to the groove 8, with s flat surface 11.

A sheet metal housing 12 is so shaped as to the house the bushing 10 and is restrained, for example by welding, to the plate member 1.

The housing 12 laterally projects with respect to the bushing 10 in such a way that a pin pairs 13 is able of preventing the bushings 10 from being laterally shifted, thereby affording the possibility of easily replacing them.

5

0187939

The procedures or methods for affixing the plate members 1 to the inner part of the duct body may be many, for example welding, bolting to the frame and the like.

CLAIMS:

1. A duct for supplying electric power, characterized in that all of the conductors forming it are arranged with their center of gravity arranged at even spaces along a circle the center of which coincides with the center of gravity of the neutral wire, as it is provided.

2. A duct according to claim 1, characterized in that the number of conductors for phase is greater than 1.

3. A duct according to claim 2, characterized in that the conductors (a, b, c) are supported in slots of small insulating blocks (3, 10) housed at the ends of through openings (2), formed through plate members (1) transversely arranged with respect to the duct longitudinal axis.

4. A duct according to the preceding claims, characterized in that the plate member (1) is provided with cuts (9) coupling an opening set (2) therethrough a different phase conductor assembly is caused to pass.

1/3

0187939

Fig. 1

Fig. 2

0187939

1

3    9    3

3

9

2

9    2

9    2

3

*Fig. 3*

1

6    5

3

V

V

9

9

4

2

8

VII    8

1

5    6

*Fig. 4*

5    8    6

1    4

1

*Fig. 5*

Fig. 6

Fig. 7

Fig. 8